# EUROPEAN PATENT SPECIFICATION

(11) **EP 1 393 507 B1**
(45) Date of publication and mention of the grant of the patent: **11.10.2006**
(21) Application number: 02727877.9
(22) Date of filing: 08.05.2002
(51) Int. Cl.: H04L 12/56

(54) **Wireless distributed communications network**
Verteiltes Funknetzwerk
Réseau de communications distribue sans fil

(30) Priority: 17.05.2001 GB 0112017
(43) Date of publication of application: 03.03.2004
(73) Proprietor: Koninklijke Philips Electronics N.V., 5621 BA Eindhoven (NL)
(72) Inventor: MARSDEN, Ian, A., NL-5656 AA Eindhoven (NL); MARSHALL, Paul, R., NL-5656 AA Eindhoven (NL)
(74) Representative: White, Andrew Gordon
(86) International application number: PCT/IB2002/001620
(87) International publication number: WO 2002/093844

(56) References cited:
- BHAGWAT P ET AL: "A Routing Vector Method (RVM) for Routing in Bluetooth Scatternets" INTERNATIONAL WORKSHOP ON MOBILE MULTIMEDIA COMMUNICATIONS, XX, XX, 15 November 1999 (1999-11-15), pages 375-379, XP002137402
- PERKINS C E ET AL: "Ad-hoc On-Demand Distance Vector Routing" PROCEEDINGS WMCSA, XX, XX, 25 February 1999 (1999-02-25), pages 90-100, XP002173721
- TANENBAUM, ANDREW: "Computer Networks" 15 January 1996 (1996-01-15) , PRENTENCE HALL , NEW JERSEY XP000864206 ISBN: 0-13-349945-6 page 415 -page 416
- BOUKERCHE A.: 'PERFORMANCE COMPARISON AND ANALYSIS OF AD HOC ROUTING ALGORITHMS' CONFERENCE PROCEEDINGS OF THE 2001 IEEE INTERNATIONAL PERFORMANCE vol. CONF.20, 04 April 2001, NEW YORK, NY : IEEE, US, pages 171 - 178, XP001049952
- SUBRAMANIAN L.; KATZ R.H.: 'An architecture for building self-configurable systems' MOBILE AND AD HOC NETWORKING AND COMPUTING 2000, PISCATAWAY, NJ, USA, IEEE, pages 63 - 73, XP010511735

## Description

### Technical Field

The present invention relates to a wireless distributed communications network having particular, but not exclusive, application to multiple hop radio control networks, such as networks for the control of street lighting, and multiple hop radio monitoring networks.

### Background Art

Multiple hop radio networks typically comprise a primary device or node which stores a routing table of the links between the primary device and secondary devices or nodes. Such networks have been found to be difficult to install and configure in an optimum manner. Complete knowledge of the network and its loading is usually essential. Also it has been necessary to preprogram into a secondary device every anticipated communication path that a user of the secondary device may require. Thus the quality of a network and its installation is dependent on the competency of the installer. Further any message being passed across the network to the primary node from the outset needs to contain all of the addressing and routing information for the message to complete its route which in the case of several hops means that a data packet is long because of the need to include the addresses of all the secondary nodes lying on the virtual route. In the field of low power data transmission it is known that shorter messages can be relayed more reliably across a network than longer messages. If the network changes, for example by the addition or removal of secondary nodes, then information about these changes and their effects on the routing table have to be entered regularly on all the nodes. If a defined route fails due a secondary node becoming defective then any slave nodes downstream of the affected secondary node are orphaned until the problem is rectified by repairing the defective secondary node or by allocating new routes the quality of which relies on an installer knowing the route to the respective secondary devices. As a consequence of these shortcomings multiple hop radio networks have not been widely used. However with the advent of low cost radio solutions to many control and monitoring networks the interest in such networks is growing especially if the known shortcomings can be overcome.

Bhagwat P et al: "A Routing Vector Method (RVM) for Routing in Bluetooth Scatternets" International Workshop on Mobile Multimedia Communications, XX, XX, 15 November 1999 (1999 - 11 - 15) pages 375 - 379, XP002137402 discloses a scatternet comprising a plurality of piconets. Each piconet comprises a master node and up to seven slave nodes. Communication is permitted between the master and slave nodes but not directly between slave nodes. In communicating with a slave node located in another piconet a header field of the data packet must include a complete routing vector field which details each stage of the route beginning with the slave node and followed by its master, another slave node, another master, a further slave and so on until the master of the destination piconet and finally the destination slave node. Such a system is not suited to cascaded networks in which slave stations can be added and be able to communicate directly with other slave stations when routing a packet to a master.

Perkins C E et al: "Ad-hoc On-demand Distance Vector Routing" Proceedings WMCSA, XX, XX, 25 February 1999 (1999 - 02 - 25), pages 90 -100, XP002173721, discloses a novel algorithm for the operation of ad-hoc networks called AODV (Ad-hoc On Demand Distance Vector Routing). AODV relies on dynamically establishing route table entries at intermediate nodes. In order to maintain the most recent routing information between nodes, the concept of destination sequence numbering is used. Each ad-hoc node maintains a monotonically increasing sequence number counter which is used to supersede stale cached routes. AODV requires a mobile node to maintain a route table entry for each destination of interest, the route table entry contains the following information: Destination; Next Hop; Number of Hops (metric); Sequence number for the destination; Active neighbours for this route; and Expiration time for the route table entry.

If a new route is offered to a mobile node, the mobile node compares the destination sequence number of the new route to the destination sequence for the current route. The route with the greater sequence number is chosen. If the sequence numbers are the same, then the new route is selected only if it has a smaller metric (fewer number of hops) to the destination. The mobile nodes store only the routes which are needed.

Azzedine Boukerche "Performance Comparison and Analysis of Ad Hoc Routing Algorithms" published by the IEEE 2001, pages 171 to 178, XP-001049952, reviews and compares three ad-hoc routing protocols, namely (1) Dynamic Source Routing (DSR), (2) On Demand Distance Vector Routing (AODV) and (3) Cluster Based Routing Protocol (CBRP).

In DSR the sender of a data packet determines the complete route from itself to the destination and includes the route in the packet. All the intermediate hosts forward the data packet based on a predetermined route. No routing decisions are made at the intermediate hosts. Route discovery is initated by a host broadcasting a route request to its neighbours. The route request contains the address of the destination host as well as a route record which records the hosts that the request has passed. Upon receiving a route request, a host checks if it knows a route to the destination or itself is the destination. In both cases, the complete route from the initiator to the destination is found. This route is then applied to the initiator. Otherwise, the host appends its address to the route record and re-broadcasts the route request to its neighbours.

As AODV is discussed above then in the interests of brevity it will not be discussed again.

In CBRP mobile hosts form clusters and the head of a cluster knows the addresses of all of its members. Hence broadcasting route requests only to the cluster heads is equivalent to broadcasting to every host in the network.

### Disclosure of Invention

The invention is defined by the independent claims.

It is an object of the present invention to enable multiple hop radio networks to adapt to changes on the networks.

It is another object of the present invention to facilitate a new secondary node joining a multiple hop radio network.

According to a first aspect of the present invention there is provided a distributed wireless communications network comprising a primary node functioning as a master node and a plurality of secondary nodes, wherein the primary node and the respective secondary nodes are operatively interconnected with at least one of the secondary nodes being directly operatively interconnected with the primary node and at least a second of the secondary nodes being indirectly operatively interconnected with the primary node using at least a third of the secondary nodes between the second of the secondary nodes and the primary node, the primary node having storage means for storing routing data relating to the wireless communications network, characterised in that each of the secondary nodes has means for storing as uplink routing information only the address of the next node in a route of a data packet to the primary node, and means, responsive to receiving an uplink data packet from a secondary node, for reading-out the address of the next node from the storage means, substituting the address of the next node in a destination field of the data packet and forwarding the data packet to the said next node.

According to a second aspect of the present invention there is provided a method of operating a distributed wireless network comprising a primary node and a plurality of secondary nodes, wherein the primary node and the respective secondary nodes are operatively interconnected with at least one of the secondary nodes being directly operatively interconnected with the primary node and at least a second of the secondary nodes being indirectly operatively interconnected with the primary node using at least a third of the secondary nodes between the second of the secondary nodes and the primary node, and wherein the primary node stores routing data relating to the network, characterised by each of the secondary nodes storing as uplink routing information only the address of the next node in a route of a data packet to the primary node, and by, in response to receiving an uplink data packet from a secondary node, reading-out the address of the next node from the storage means, substituting the address of the next node in a destination field of the data packet and forwarding the data packet to the said next node.

By means of a secondary node storing the address of the next node in the routing plan, the network can be modified by the addition or removal of secondary nodes without all the nodes having to be updated to record these changes in a prestored complete routing plan. The route from a secondary node to the primary node is dynamically determined which provides flexibility in the configuration of the network following any changes affecting it. Another beneficial feature is that the data packet is shortest for the first hop of a message being propagated towards a primary node which means that the data packet is inherently more reliable to transmit.

The network is built-up originally from the primary node which is not in direct communication with all of the secondary nodes. Thus when a secondary node is added to or removed from the network only those secondary nodes in its vicinity are involved in routing decisions.

According to a third aspect of the present invention there is provided a secondary node for use as a source/routing node in a distributed wireless communications network comprising a primary node functioning as a master node and a plurality of secondary nodes, wherein the primary node and the respective secondary nodes are operatively interconnected with at least one of the secondary nodes being operatively interconnected with the primary node and at least a second of the secondary nodes being indirectly operatively interconnected with the primary node using at least a third of the secondary nodes between the second of the secondary nodes and the primary node, the secondary node comprising transceiving means for communicating with at least one of the primary node and the plurality of secondary nodes, characterized in that the secondary node comprises storage means for storing as uplink routing information only the address of the next node in a route of a data packet to the primary node, and means, responsive to receiving an uplink data packet from a secondary node, for reading-out the address of the next node from the storage means, substituting the address of the next node in a destination field of the data packet and forwarding the data packet to the said next node.

### Brief Description of Drawings

The present invention will now be described, by way of example, with reference to the accompanying drawings, wherein:
Figure 1 is a diagrammatic representation of an embodiment of a multiple hop radio network,
Figure 2 is a diagrammatic representation of a data packet sent by a secondary node,
Figure 3 is a diagrammatic representation of a data packet sent by a primary node,
Figure 4 is a block schematic diagram of a primary device, and
Figure 5 is a block schematic diagram of a secondary device.

In the drawings the same reference numerals have been used to indicate corresponding features.

### Modes for Carrying Out the Invention

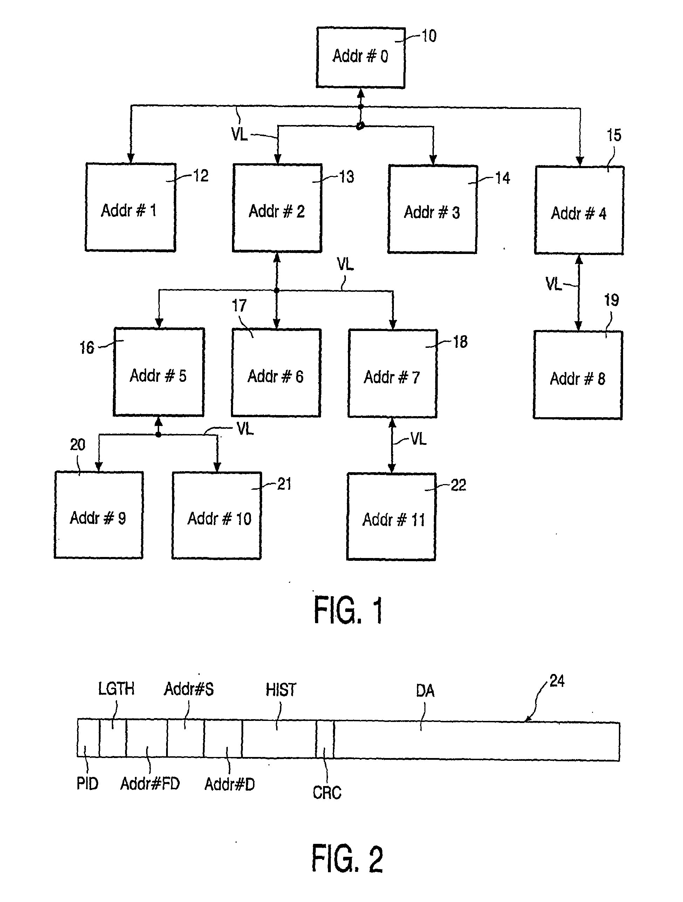

The multiple hop radio network shown in Figure 1 comprises a primary device or node 10 and a plurality of secondary devices or nodes 12 to 22 which directly or indirectly are operatively coupled to the primary device by links VL. A routing table comprising the secondary nodes 12 to 22 and the links VL is stored in the primary device 10. The illustrated network may comprise a control network for street lighting. As shown the secondary nodes 12, 13, 14 and 15 can communicate directly with the primary device 10 whereas the secondary nodes 16, 17 and 18 and the secondary node 19 have to communicate in a first hop with the secondary nodes 13 and 15, respectively, before being able to communicate with the primary device 10. The secondary nodes 20 and 21 and the secondary node 22 have to communicate in a first hop with the secondary nodes 16 and 18, respectively, and then in a second hop with the secondary node 13 before being able to communicate with the primary device 10.

The primary device 10 has an address Addr#0 and the secondary nodes 12 to 22 have addresses Addr#1 to Addr#11, respectively. For convenience of reference, the links from the secondary nodes 12, 13, 14 and 15 to the primary device 10 are termed Route#0, where #0 is the address of the primary device, and the links from the secondary nodes 16, 17, 18 to the secondary node 13 are termed Route#2, where #2 is the address of the secondary node 13. Similarly the link from the secondary node 19 to the secondary node 15 is termed Route#4, the links from the secondary nodes 20 and 21 are termed Route#5 and the link from the secondary node 22 to the secondary node 18 is termed Route#7.

The method in accordance with the present invention requires each of the secondary nodes 12 to 22 to know and store only one piece of routing information for use when sending a data packet to the primary device or node 10, this piece of information is the address of next node on the network to which messages for the primary device should be passed. As a consequence the storage of routing information is distributed thus requiring relatively small amount of memory for routing information in each secondary node. A secondary node initiating the transmission of a message will include a header in the data packet containing the address of the next node in the routing table. However as the message progresses from node to node, the header becomes longer due to the inclusion of the addresses of successive nodes in the routing table.

When the primary device 10 wishes to send a message to a secondary node, it includes the addresses of all the secondary nodes on the route to the destination secondary node. As the data packet progresses from secondary node to secondary node, the address of the transmitting secondary node is deleted thus making the header shorter and the data packet inherently more reliable.

Figure 2 illustrates an example of a data packet 24 which may be sent over a link VL to the primary device. The data packet 24 comprises several fields including a packet identity PID, packet length LGTH, address of the source (S) node Addr#S, address of the next destination (D) node Addr#D, history HIST which is the address(es) of the secondary nodes through which the data packet has been passed, cyclic redundancy check bits CRC and a data field DA. The CRC field may be located after the data field. Optionally the data packet may include the address of the final destination Addr#FD which in the case of the network shown in Figure 1 will be the address of the primary device or node Addr#0. However in wireless distributed networks having only one primary device or node this is unnecessary because all data packets are routed by the secondary nodes to the primary device or node. As an example consider the secondary node 20 sending a data packet to the primary device 10 on an uplink and the primary device responding on a downlink. For the first uplink hop in a wireless distributed network having only one primary device or node the source node address will be Addr#9, the destination node will be Addr#5 and the history field HIST will be empty. At the secondary node 16, the destination node will be changed to Addr#2 and Addr#5 is inserted into the HIST field and the data packet is transmitted on the next uplink hop. At the secondary node 13, the destination node will be changed to Addr#0 and Addr#2 will be appended to the content of the HIST field and the data packet is forwarded to the primary device 10. The respective messages may be locally handshaked at all the secondary nodes through which they are passed.

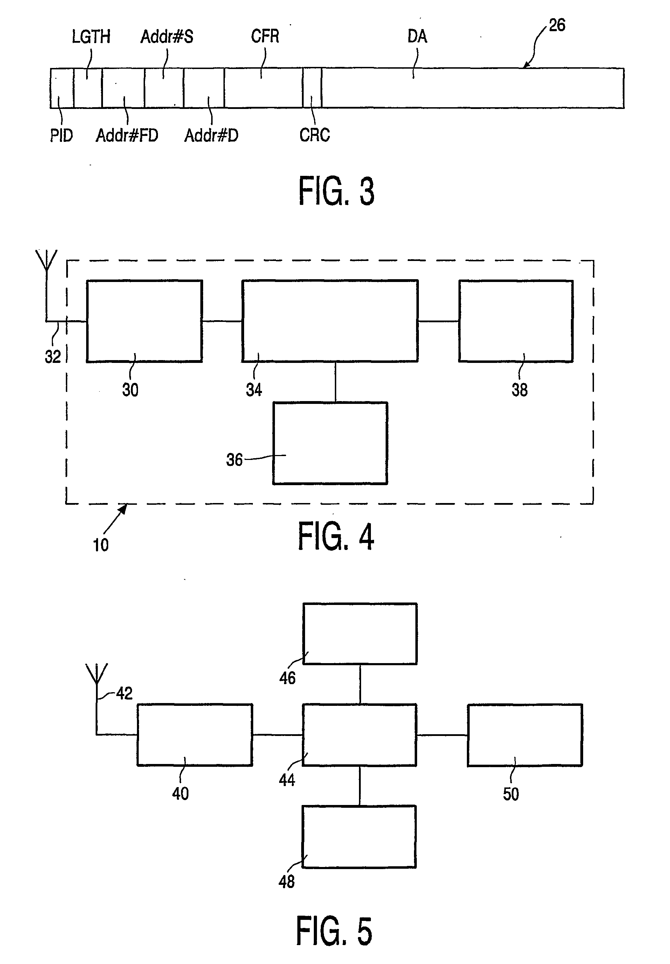

Figure 3 illustrates an example of a data packet 26 which may be sent by the primary device to a slave node. The data packet has eight fields all of which apart from Complete Future Route CFR, which replaces HIST in the uplink data packet shown in Figure 2, are the same as those shown in Figure 2 and accordingly will not be described again. The field CFR contains the addresses of all the secondary nodes which will be used on the downlink transmission and which have been derived from a routing table stored in primary device 10. At the commencement of the primary device 10 sending the data packet to the secondary node 20, the final destination address Addr#FD is Addr#9, the source address Addr#S is primary device's address Addr#0, the next destination address Addr#D is the address of the next hop Addr#2, and the CFR field contains Addr#5 and Addr#9. At the secondary node 13, the Addr#2 is replaced by Addr#5 and Addr#5 is deleted in the CFR field. At the secondary node 16, Addr#9 replaces Addr#5 in the destination field and Addr#9 is deleted from the CFR field which becomes empty.

Thus in the case of a wireless network for providing notification of street lamp failure to a central control station, each street lamp is monitored by a secondary node and information about a lamp failure ripples through the network to the primary device 10.

Each secondary node has a unique address. If the network includes an address server then on installation, the user could request that the unique address be replaced by a more user friendly unique radio address which can be shorter and will therefore be more economical to transmit.

In order to enable the network to change dynamically to take in account secondary nodes, such as street lamps, joining or leaving the network, various options are possible.

In the case of a new secondary station being installed and not having any routing information pre-stored in it apart from its own unique address, it issues a message to all those secondary devices in range requesting information on routing to the primary device 10. The in-range secondary devices respond to this message by passing back information relating to their first hop of a route to the primary device. This information can additionally include other data such as the number of subsequent hops before a data packet reaches the primary device, the loading on the route to the primary device, the reliability of the route to the primary device and factors relating directly to the secondary nodes and their desire to be used to pass messages, for example that a secondary node is battery powered and for battery economy reasons would prefer not to pass messages.

A processor in the new secondary node can select a preferred route to the primary device based on the number of hops, desired reliability and effective loading having regard to its own message rate. However the only information that it needs to store locally is the address of the first secondary node in the route to the primary device 10 and, if desired, sufficient information about the route that a further secondary node added to the network can select a route in a similar manner. Once the new secondary node has established its preferred routing to the primary device 10 it is now in a position to offer the service of a route to the primary device. It sends a network change message to the primary device 10 stating that it has joined the network.

Another option which is possible is for a secondary node to review its route to the primary device 10 and then reconfigure itself if the existing route is no longer optimal because secondary nodes have been added or removed.

In the event of a change to the network, a network change message is broadcast and a secondary node on receipt of this message has the option of re-evaluating its routing decision based on the new information. In this mode, the secondary node is free to alter its decision accordingly. If a secondary node makes a decision to alter its route to the primary device, it informs all those secondary nodes which rely on it for their route so that they can then re-evaluate their routing. By this process of constant re-evaluation, a network can be maintained over a period of time even though it is changing in structure.
When a new secondary node is first installed it issues a "request route to master device" message. It will initially transmit zero as the allowable number of hops. The only node which can respond to this message is primary device itself. Assuming that the primary device is not within earshot the new secondary node will not receive any responses. The new secondary node will then try again with an increased value of allowable hops which allows the secondary nodes on the network to respond if they meet the criteria. It will carry on this process until it receives a response. The response will inform the new secondary node of the secondary address to use as the first hop in its route to the primary device. To confirm the route to the primary device and also inform the primary device of the new secondary node's presence, the new secondary node will issue a "ping" to the primary device using its own unique address, typically 48 bits long. The primary device will then update its routing table and reply with a "pong" confirming the validity of the route. On receipt of the pong the new secondary node knows that it has a valid registered route to the primary device and can now commence attempting to connect to its allocated primary device (assuming they are not the same device). The new secondary node then issues an "indicate route to primary device" message to inform neighbouring secondary nodes of the fact that it has a route to the primary device, and is then in the position to offer the service of a route to the primary device. Secondary nodes local to the new secondary node, on receipt of an "indicate route to primary device" message may re-evaluate their own route to the primary device.

If a secondary node decides to change its route, it will confirm the new route by sending a ping to the primary device. This process is carried out in the same way as before. Once the new secondary node has joined the network it is then in a position to offer the service of a route to the primary device itself.

Irrespective of the process of adding a new secondary node to the network all the secondary nodes on the network will have stored the first hop of the route back to the primary device. A message to the primary device will ripple through the network from secondary node to secondary node using the routing information stored in each node as it passes through. In contrast to network management messages, which must contain the entire route history on reaching the primary device, this information does not need to be included for a data packet, leading to a shorter message.

By constructing "Complete Future Route" (CFR) a primary device can send a message to any secondary node in the network. The primary device will use the routing table which it has learnt to construct the CFR.

If the primary device with which the new secondary device should communicate with is different to that of the address server then the secondary device will again issue a request route to primary devices's message but this time give the actual primary device's address it is seeking. The process is carried out in exactly the same way as before.

Referring to Figure 4 the primary device 10 comprises a transceiver 30 coupled on one hand to an antenna 32 and on the other hand to a processor 34 which controls the operation of the primary device 10 in accordance with software stored in a ROM 36. A RAM 38 stores routing data which is supplied to the processor as required depending on the current network architecture which is updated dynamically by secondary nodes joining or leaving the network and by secondary nodes determining a new optimum route following alterations, including breakdowns and repairs, to the network.

Referring to Figure 5, a secondary node comprises a transceiver 40 coupled on the one hand to an antenna 42 and on the other hand to a microprocessor 44 which controls the operation of the secondary node in accordance with software stored in a ROM 46. Another ROM 48 storing the address of the secondary node is coupled to the processor 44. Lastly a RAM 50 storing the address of the next secondary node in the route to the primary device 10 or the address of the primary device 10 if it is the final station on the route.

In the present specification and claims the word "a" or "an" preceding an element does not exclude the presence of a plurality of such elements. Further the word "comprising" does not exclude the presence of other elements or steps than those listed.

From reading the present disclosure, other modifications will be apparent to persons skilled in the art. Such modifications may involve other features which are already known in the design, manufacture and use of wireless distributed communications networks and component parts therefor and which may be used instead of or in addition to features already described herein.

### Industrial Applicability

Wireless distributed communications networks.

## Claims

1. A distributed wireless communications network comprising a primary node (10) functioning as a master node and a plurality of secondary nodes (12 to 22), wherein the primary node and the respective secondary nodes are operatively interconnected with at least one of the secondary nodes being directly operatively interconnected with the primary node and at least a second of the secondary nodes being indirectly operatively interconnected with the primary node using at least a third of the secondary nodes between the second of the secondary nodes and the primary node, the primary node having storage means (38) for storing routing data relating to the wireless communications network, **characterised in that** each of the secondary nodes has means for storing as uplink routing information only the address of the next node in a route of a data packet to the primary node, and means, responsive to receiving an uplink data packet (24) from a secondary node, for reading-out the address of the next node from the storage means, substituting the address of the next node in a destination field (Addr#D) of the data packet and forwarding the data packet to the said next node.

2. A distributed wireless communications network as claimed in claim 1, **characterised in that** the node address of the secondary node receiving a data packet on the uplink is placed in a history field (HIST) of the data packet.

3. A method of operating a distributed wireless network comprising a primary node (10) and a plurality of secondary nodes (12 to 22), wherein the primary node and the respective secondary nodes are operatively interconnected with at least one of the secondary nodes being directly operatively interconnected with the primary node and at least a second of the secondary nodes being indirectly operatively interconnected with the primary node using at least a third of the secondary nodes between the second of the secondary nodes and the primary node, and wherein the primary node stores routing data relating to the network, **characterised by** each of the secondary nodes storing as uplink routing information only the address of the next node in a route of a data packet to the primary node, and by, in response to receiving an uplink data packet (24) from a secondary node, reading-out the address of the next node from the storage means, substituting the address of the next node in a destination field (Addr#D) of the data packet and forwarding the data packet to the said next node.

4. A method as claimed in claim 3, **characterised by** a secondary node in response to receiving an uplink data packet, shifting its own node address from the destination field into a history field (HIST) of the data packet.

5. A method as claimed in claim 3 or 4, wherein the primary node supplies a routing information field containing node addresses of the secondary nodes used on the downlink transmission of a downlink data packet, **characterised by** a secondary node receiving a downlink data packet removing its own node address from the routing information field and forwarding the altered data packet to the next following secondary node as stored in the routing information field.

6. A method as claimed in any one of claims 3 to 5, **characterised by** a new secondary node transmitting an invitation message requesting routing information from in-range secondary nodes, the new secondary node receiving routing information and determining which of the in-range secondary nodes is the preferred next node in the route of a data packet to the primary node.

7. A secondary node for use as a source/routing node in a distributed wireless communications network comprising a primary node (10) functioning as a master node and a plurality of secondary nodes (12 to 22), wherein the primary node and the respective secondary nodes are operatively interconnected with at least one of the secondary nodes being directly operatively interconnected with the primary node and at least a second of the secondary nodes being indirectly operatively interconnected with the primary node using at least a third of the secondary nodes between the second of the secondary nodes and the primary node, the secondary node comprising transceiving means for communicating with at least one of the primary node and the plurality of secondary nodes **characterized in that** the secondary node comprises storage means for storing as uplink routing information only the address of the next node in a route of a data packet to the primary node, and means, responsive to receiving an uplink data packet (24) from a secondary node, for reading-out the address of the next node from the storage means, substituting the address of the next node in a destination field (Addr#D) of the data packet and forwarding the data packet to the said next node.

8. A secondary node as claimed in claim 7, **characterised in that** the node address of the secondary node receiving a data packet on the uplink is placed in a history field (HIST) of the data packet.

9. A secondary node as claimed in claim 7, wherein a downlink data packet comprises a routing information field containing node address(es) of the secondary nodes used on the downlink transmission and **characterised by** a secondary node receiving a data packet removing its own address from the routing information field and forwarding the altered data packet to the next following secondary node as shown in the routing information field.

## Patentansprüche

1. Verteiltes drahtloses Kommunikationsnetzwerk mit einem Primärknoten (10), der als Masterknoten funktioniert, und mit einer Anzahl Sekundärknoten (12 bis 22), wobei der Primärknoten und die betreffenden Sekundärknoten operativ mit wenigstens einem der Sekundärknoten verbunden sind, die unmittelbar operativ mit dem Primärknoten verbunden ist und wobei wenigstens ein zweiter Knoten der Sekundärknoten indirekt operativ mit dem Primärknoten verbunden ist, und zwar unter Verwendung wenigstens eines dritten Knotens der Sekundärknoten zwischen dem zweiten Knoten der Sekundärknoten und dem Primärknoten, wobei der Primärknoten Speichermittel (38) aufweist zum Speichern von Routingdaten in Bezug auf das drahtlose Kommunikationsnetzwerk, **dadurch gekennzeichnet, dass** jeder der Sekundärknoten Mittel aufweist zum Speichern als Uplink-Routinginformation nur der Adresse des nächsten Knotens in einer Route eines Datenpaktes zu dem Primärknoten, und Mittel, die in Reaktion auf den Empfang eines Uplink-Datenpakets (24) von einem Sekundärknoten, die Adresse des nächsten Knotens aus den Speichermitteln ausliest, wobei die Adresse des nächsten Knotens in einem Zielfeld (Addr#D) des Datenpakets ersetzt und das Datenpaket zu dem genannten nächsten Knoten weitergeleitet wird.

2. Verteiltes drahtloses Kommunikationsnetzwerk nach Anspruch 1, **dadurch gekennzeichnet, dass** die Knotenadresse des Sekundärknotens, der bei der Anbindung nach oben ein Datenpaket empfängt, in ein Verlauffeld (HIST) des Datenpakets gesetzt wird.

3. Verfahren zum Betreiben eines verteilten drahtlosen Netzwerkes mit einem Primärknoten (10) und einer Anzahl Sekundärknoten (12 bis 22), wobei der Primärknoten und die betreffenden Sekundärknoten operativ mit wenigstens einem Knoten der Sekundärknoten verbunden sind, der unmittelbar operativ mit dem Primärknoten und wenigstens einem zweiten Knoten der Sekundärknoten verbunden ist, der indirekt operativ mit dem Primärknoten verbunden ist, unter Verwendung wenigstens eines dritten Knotens der Sekundärknoten zwischen dem zweiten Knoten der Sekundärknoten und dem Primärknoten, und wobei der Primärknoten Routingdaten in Bezug auf das Netzwerk speichert, **dadurch gekennzeichnet, dass** jeder der Sekundärknoten als Uplink-Routinginformation nur die Adresse des nächsten Knotens in einer Route eines Datenpakets zu dem Primärknoten speichert, und dass in Reaktion auf den Empfang eines Uplink-Datenpakets (24) von dem Sekundärknoten, die Adresse des nächsten Knotens aus den Speichermitteln ausgelesen wird, wobei die Adresse des nächsten Knotens in einem Zielfeld (Addr#D) des Datenpakets ersetzt und das Datenpaket zu dem nächsten genannten Knoten weitergeleitet wird.

4. Verfahren nach Anspruch 3, **dadurch gekennzeichnet, dass** ein Sekundärknoten in Reaktion auf den Empfang eines Uplink-Datenpakets die eigene Knotenadresse aus dem Zielfeld in ein Verlauffeld (HIST) des Datenpakets schiebt.

5. Verfahren nach Anspruch 3 oder 4, wobei der Primärknoten ein Routing-Informationsfeld mit (einer) Knotenadresse(n) der Sekundärknoten liefert, die bei der Downlink-Übertragung eines Downlink-Datenpakets verwendet werden, **dadurch gekennzeichnet, dass** ein Sekundärknoten, der ein Downlink-Datenpaket empfängt, die eigene Knotenadresse aus dem Routing-Informationsfeld löscht und das geänderte Datenpaket zu dem nächsten Sekundärknoten weiterleitet, wie dies in dem Routing-Informationsfeld gespeichert ist.

6. Verfahren nach einem der Ansprüche 3 bis 5, **dadurch gekennzeichnet, dass** ein neuer Sekundärknoten eine Einladungsnachricht überträgt, worin Routing-Information von Sekundärknoten innerhalb des Bereichs beantragt wird, wobei der neue Sekundärknoten Routing-Information empfängt und ermittelt, welcher der Sekundärknoten innerhalb des Bereichs der bevorzugte nächste Knoten in der Route eines Datenpakets zu dem Primärknoten ist.

7. Sekundärknoten zur Verwendung als Quellen/Routing-Knoten in einem verteilten drahtlosen Kommunikationsnetzwerk mit einem Primärknoten (10), der als Masterknoten wirksam ist, und mit einer Anzahl Sekundärknoten (12 bis 22), wobei der Primärknoten und die betreffenden Sekundärknoten operativ mit wenigstens einem Knoten der Sekundärknoten verbunden ist, die unmittelbar operativ mit dem Primärknoten und wenigstens einem zweiten Knoten der Sekundärknoten verbunden sind, der indirekt operativ mit dem Primärknoten verbunden ist, und zwar unter Verwendung wenigstens eines dritten Knotens der Sekundärknoten zwischen dem zweiten Knoten der Sekundärknoten und dem Primärknoten, wobei der Sekundärknoten Transceivermittel aufweist zur Kommunikation mit wenigstens einem Knoten des Primärknotens und der vielen Sekundärknoten, **dadurch gekennzeichnet, dass** der Sekundärknoten Speichermittel aufweist zum Speichern als Uplink-Routing-Information nur der Adresse des nächsten Knotens in einer Route eines Datenpakets zu dem primären Knoten, und Mittel, die in Reaktion auf den Empfang eines Uplink-Datenpakets (24) von einem Sekundärknoten die Adresse des nächsten Knotens aus den Speichermitteln ausliest, wobei die Adresse des nächsten Knotens in einem Zielfeld (Addr#D) des Datenpakets ersetzt und das Datenpaket zu dem nächsten Knoten weitergeleitet wird.

8. Sekundärknoten nach Anspruch 7, **dadurch gekennzeichnet, dass** die Knotenadresse des Sekundärknotens, der ein Datenpaket in der Uplink empfängt, in ein Verlauffeld (HIST) des Datenpakets gesetzt wird.

9. Sekundärknoten nach Anspruch 7, wobei Ein Downlink-Datenpaket ein Routing-Informationsfeld mit Knotenadresse(n) der Sekundärknoten aufweist, die bei der Downlink-Übertragung verwendet worden sind, und **dadurch gekennzeichnet, dass** ein Sekundärknoten, der ein Datenpaket empfängt, die eigene Adresse aus dem Routing-Informationsfeld löscht und das geänderte Datenpaket zu dem nächsten Sekundärknoten weiterleitet, wie in dem Routing-Informationsfeld dargestellt.

## Revendications

1. Réseau de communications distribué sans fil comprenant un noeud primaire (10) fonctionnant comme un noeud maître et une pluralité de noeuds secondaires (12 à 22), dans lequel le noeud primaire et les noeuds secondaires respectifs opèrent en interconnexion avec au moins un des noeuds secondaires opérant en interconnexion directe avec le noeud primaire et au moins un second noeud secondaire opérant en interconnexion indirecte avec le noeud primaire en utilisant au moins un troisième noeud secondaire entre le second noeud secondaire et le noeud primaire, le noeud primaire possédant des moyens de mémorisation (38) pour mémoriser des données de routage concernant le réseau de communications sans fil, **caractérisé en ce que** chacun des noeuds secondaires possède des moyens de mémoriser, comme information de routage de liaison montante, seulement l'adresse du noeud suivant sur une route d'un paquet de données menant au noeud primaire, et des moyens, réagissant à la réception d'un paquet de données de liaison montante (24) provenant d'un noeud secondaire, pour lire l'adresse du noeud suivant à partir des moyens de mémorisation, substituer l'adresse du noeud suivant dans un champ de destination (Addr#D) du paquet de données et faire suivre le paquet de données vers ledit noeud suivant.

2. Réseau de communications distribué sans fil selon la revendication 1, **caractérisé en ce que** l'adresse de noeud du noeud secondaire recevant un paquet de données sur la liaison montante est placée dans un champ d'historique (HIST) du paquet de données.

3. Procédé d'exploitation d'un réseau distribué sans fil comprenant un noeud primaire (10) et une pluralité de noeuds secondaires (12 à 22), dans lequel le noeud primaire et les noeuds secondaires respectifs opèrent en interconnexion avec au moins un des noeuds secondaires opérant en interconnexion directe avec le noeud primaire et au moins un second noeud secondaire opérant en interconnexion indirecte avec le noeud primaire en utilisant au moins un troisième noeud secondaire entre le second noeud secondaire et le noeud primaire, et dans lequel le noeud primaire mémorise des données de routage concernant le réseau, **caractérisé par** chacun des noeuds secondaires mémorisant, comme information de routage de liaison montante, seulement l'adresse du noeud suivant sur une route d'un paquet de données menant au noeud primaire, et par, en réponse à la réception d'un paquet de données de liaison montante (24) provenant d'un noeud secondaire, la lecture de l'adresse du noeud suivant à partir des moyens de lecture, la substitution de l'adresse du noeud suivant dans un champ de destination (Addr#D) du paquet de données et la transmission du paquet de données audit noeud suivant.

4. Procédé selon la revendication 3, **caractérisé par** un noeud secondaire en réponse à la réception d'un paquet de données de liaison montante, déplaçant sa propre adresse de noeud du champ de destination dans un champ d'historique (HIST) du paquet de données.

5. Procédé selon la revendication 3 ou 4, dans lequel le noeud primaire fournit un champ d'information de routage contenant des adresses de noeud des noeuds secondaires utilisés dans la transmission de liaison descendante d'un paquet de données de liaison descendante, **caractérisé par** un noeud secondaire recevant un paquet de données de liaison descendante, supprimant sa propre adresse de noeud du champ d'information de routage et faisant suivre le paquet de données modifié vers le noeud secondaire suivant, comme mémorisé dans le champ d'information de routage.

6. Procédé selon l'une quelconque des revendications 3 à 5, **caractérisé par** un nouveau noeud secondaire émettant un message d'invitation demandant de l'information de routage provenant de noeuds secondaires situés sur le parcours, le nouveau noeud secondaire recevant de l'information de routage et déterminant lequel des noeuds secondaires situés sur le parcours est le noeud suivant préféré sur la route d'un paquet de données menant au noeud primaire.

7. Noeud secondaire destiné à être utilisé comme noeud source / de routage dans un réseau de communications distribué sans fil comprenant un noeud primaire (10) fonctionnant comme un noeud maître et une pluralité de noeuds secondaires (12 à 22), dans lequel le noeud primaire et les noeuds secondaires respectifs opèrent en interconnexion avec au moins un des noeuds secondaires opérant en interconnexion directe avec le noeud primaire et au moins un second noeud secondaire opérant en interconnexion indirecte avec le noeud primaire en utilisant au moins un troisième noeud secondaire entre le second noeud secondaire et le noeud primaire, le noeud secondaire comprenant des moyens de transmission dans les deux sens pour communiquer avec au moins un noeud parmi le noeud primaire et la pluralité de noeuds secondaires, **caractérisé en ce que** le noeud secondaire comprend des moyens de mémorisation pour mémoriser, comme information de routage de liaison montante, seulement l'adresse du noeud suivant sur une route d'un paquet de données menant au noeud primaire, et des moyens, réagissant à la réception d'un paquet de données de liaison montante (24) provenant d'un noeud secondaire, pour lire l'adresse du noeud suivant à partir des moyens de mémorisation, substituer l'adresse du noeud suivant dans un champ de destination (Addr#D) du paquet de données et faire suivre le paquet de données vers ledit noeud suivant.

8. Noeud secondaire selon la revendication 7, **caractérisé en ce que** l'adresse de noeud du noeud secondaire recevant un paquet de données sur la liaison montante est placée dans un champ d'historique (HIST) du paquet de données.

9. Noeud secondaire selon la revendication 7, où un paquet de données de liaison descendante comprend un champ d'information de routage contenant les adresses de noeud des noeuds secondaires utilisés lors de la transmission de liaison descendante et **caractérisé par** un noeud secondaire recevant un paquet de données, supprimant sa propre adresse du champ d'information de routage et faisant suivre le paquet de données modifié vers le noeud secondaire suivant comme montré dans le champ d'information de routage.
